# EUROPEAN PATENT SPECIFICATION

(11) **EP 2 383 482 B1**
(45) Date of publication and mention of the grant of the patent: **06.03.2013**
(21) Application number: 11163684.1
(22) Date of filing: 26.04.2011
(51) Int. Cl.: F16C 37/00, F16C 19/52, F16C 33/58

(54) **Rolling bearing device with fluid bypass passage-ways.**
Wälzlagervorrichtung mit Durchgängen für Füssigkeitsnebenleitung.
Dispositif de paliers à roulement avec passages pour dérivation de fluide.

(30) Priority: 28.04.2010 JP 2010103914
(43) Date of publication of application: 02.11.2011
(73) Proprietor: JTEKT CORPORATION, Osaka-shi Osaka 542-8502 (JP)
(72) Inventor: Hamada, Kazuki, Osaka-shi Osaka 542-8502 (JP); Ueno, Hiroshi, Osaka-shi Osaka 542-8502 (JP); Usuki, Isao, Osaka-shi Osaka 542-8502 (JP)
(74) Representative: TBK

(56) References cited:
- EP-A1- 2 280 180
- EP-A2- 0 812 996
- EP-A2- 1 775 489
- JP-A- 6 017 797
- JP-A- 61 096 219

## Description

The invention relates to a rolling bearing device according to the preamble of claim 1 or 2.

There is an existing rolling bearing that includes a plurality of rolling elements arranged between an inner ring and an outer ring. In the rolling bearing, grease is supplied in an annular space between the inner ring and the outer ring, and the annular space is sealed up with seal members to prevent leakage of the grease (refer to, for example, JP 2008-95753 A). The radially-outer end portions of the seal members are fixed to the respective axial end portions of the outer ring. The seal members have sliding surfaces, which slide with respect to the inner ring, at the radially-inner end portions.

In the rolling bearing that includes contact-type seal members as described above, because sliding resistance is generated between the seal members and the inner ring, a rotational load increases. Therefore, using such a rolling bearing for devices that are required to rotate at high speed is not favorable. Accordingly, for the devices that are required to rotate at high speed, using non-contact-type seal members such as labyrinth seals instead of contact-type seal members is favorable.

However, under an environment where fluid such as gas or liquid flows around the rolling bearing, especially, under an environment where high-pressure fluid flows around the rolling bearing, there is a high possibility that the fluid enters the annular space between the inner ring and the outer ring through seal gaps between the seal members and the inner ring. Then, the grease present within the annular space may be washed away by the fluid that has entered the annular space. As a result, a decrease in the lubricating function may be accelerated. Therefore, some measures need to be taken to address this problem. Even in a case where contact-type seal members are used, it is preferable to provide the function of preventing fluid from entering gaps between the seal members and the inner ring as the overall rolling bearing, in addition to the sealing function of the seal members alone, under the environment where high-pressure fluid flows.

EP 1 775 489 A2 shows a generic rolling bearing device according to the preamble of claim 1 or 2.

EP 2 280 180 A1 is a prior art document according to Art. 54(3) EPC and shows a rolling bearing device comprising a housing through hole arranged in a housing and further holes and recess portions in an outer bearing ring of a rolling bearing.

EP 0 812 996 A2 shows another rolling bearing device according to the prior art in which escape passages are formed in the shape of continuous slots in radial and axial directions of the bearing device.

### Summary of the invention

It is an object of the present invention to further develop a rolling bearing device according to the preamble of claim 1 or claim 2 such that lubricating function of the rolling bearing device even under a high pressure fluid flow environment is efficiently maintained.

The object of the present invention is achieved by a rolling bearing device having the features of claim 1 or claim 2.

Further advantageous developments of the present invention are defined in the depended claims.

It is an advantage of the invention to provide a rolling bearing device in which entrance of fluid into an annular space between a fixed bearing ring and a rotating bearing ring is suppressed even under an environment where fluid flows around the rolling bearing.

### Brief description of the drawings

The foregoing and further features and advantages of the invention will become apparent from the following description of example embodiments with reference to the accompanying drawings, wherein like numerals are used to represent like elements and wherein:
FIG. 1 is a sectional view schematically showing a rolling bearing device according to an embodiment of the invention;
FIG 2 is a sectional view taken along the line II-II in FIG 1;
FIG. 3 is a perspective view showing a rolling bearing;
FIG. 4 is a perspective view showing the rolling bearing cut along a plane that passes the axis of the rolling bearing;
FIG. 5 is a sectional view showing a rolling bearing according to a modified example (view corresponding to the sectional view taken along the line II-II in FIG 1); and
FIG 6 is a sectional view showing a rolling bearing according to another modified example (view corresponding to the sectional view taken along the line II-II in FIG 1).

### DETAILED DESCRIPTION OF EMBODIMENTS

Hereafter, an embodiment of the invention will be described with reference to the accompanying drawings.

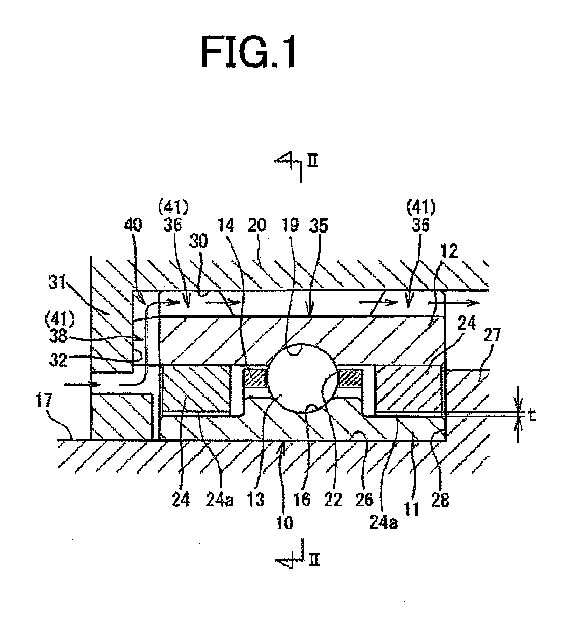

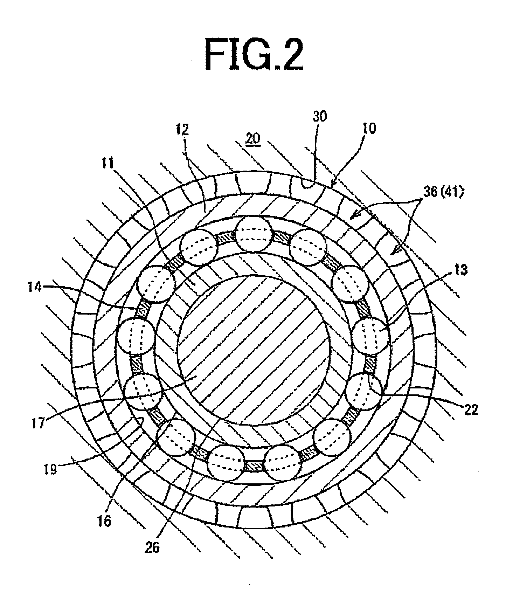

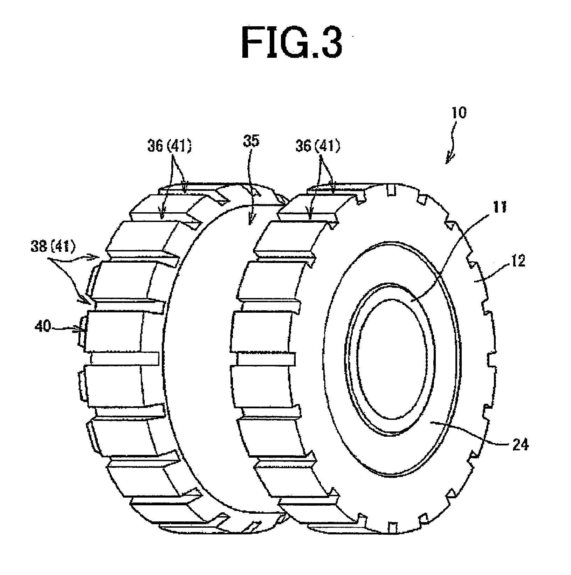

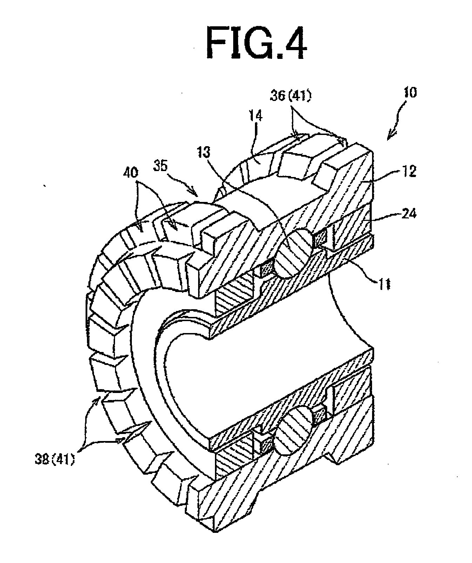

FIG. 1 is a sectional view schematically showing a rolling bearing device according to the embodiment of the invention. FIG 2 is a sectional view taken along the line II-II in FIG 1. FIG. 3 is a perspective view showing a rolling bearing 10. FIG 4 is a perspective view showing the rolling bearing 10 cut along a plane that passes the axis of the rolling bearing 10. The rolling bearing device according to the embodiment includes the rolling bearing 10 fitted to a housing 20. The rolling bearing 10 is a ball bearing that includes an inner ring 11, an outer ring 12, balls 13 that are provided between the inner ring 11 and the outer ring 12 and that serve as rolling elements, and a retainer 14 that retains the balls 13.

The inner ring 11 is formed into an annular shape. A recessed inner ring raceway surface 16 is formed in substantially the axial center portion of the outer peripheral surface of the inner ring 11 so as to extend along the whole circumference of the outer peripheral surface. A rotating shaft (rotating member) 17 is fitted and fixed to the inner peripheral surface of the inner ring 11. As the rotating shaft 17 rotates, the inner ring 11 rotates together with the rotating shaft 17. Therefore, the inner ring 11 according to the embodiment may constitute a rotating bearing ring according to the invention.

The outer ring 12 as well as the inner ring 11 is formed into an annular shape. The outer ring 12 is arranged on the radially outer side of the inner ring 11 so as to be coaxial with the inner ring 11. A recessed outer ring raceway surface 19 is formed in substantially the axial center portion of the inner peripheral surface of the outer ring 12 so as to extend along the whole circumference of the inner peripheral surface. The outer ring 12 is fixed when the outer peripheral surface thereof is fitted to the housing (fixed member) 20. Therefore, the outer ring 12 in the embodiment may constitute a fixed bearing ring according to the invention.

The retainer 14 is an annular member made of synthetic resin, for example, phenol resin. The retainer 14 has a plurality of pockets 22 used to house the balls 13 and formed at regular intervals in the circumferential direction. The balls 13 are housed in the respective pockets 22 of the retainer 14 so as to be retained at predetermined intervals in the circumferential direction. The balls 13 roll at positions between the inner ring raceway surface 16 and the outer ring raceway surface 19.

Two annular seal members 24 are fitted to the inner peripheral surface of the outer ring 12. The seal members 24 are fixed to the outer ring 12 when the seal members 24 are fitted to the respective axial end portions of the inner peripheral surface of the outer ring 12. Inner peripheral surfaces 24a of the seal members 24 are cylindrical surfaces, and arranged at positions close to the respective axial end portions of the outer peripheral surface of the inner ring 11 with seal gaps t. The seal gaps t form seal gaps (labyrinth gaps). Lubricant, for example, grease is supplied in a space between the two seal members 24.

A large-diameter portion 27 is formed on the outer peripheral surface of the rotating shaft 17. The large-diameter portion 27 is larger in outer diameter than a portion (fitted portion 26) of the notating shaft 17, to which the inner ring 11 is fitted. One axial end portion (right end portion) of the inner ling 11 contacts a step portion 28 that is formed between the fitted portion 26 and the large-diameter portion 27. Thus, movement of the inner ring 11 relative to the rotating shaft 17 toward one side (right side) in the axial direction is restricted.

The housing 20 has a small-diameter portion 31 that is smaller in inner diameter than a portion (fitted portion 30) of the housing 20, to which the outer ring 12 is fitted. The other axial end portion (left end portion) of the outer ring 12 contacts a step portion 32 that is formed between the fitted portion 30 and the small-diameter portion 31. Thus, movement of the outer ring 12 relative to the housing 20 toward the other side (left side) in the axial direction is restricted.

A recess 35 is formed in the axial center portion of the outer peripheral surface of the outer ring 12 so as to extend along the whole circumference of the outer ring 12. In addition, axial grooves 36 that extend in the axial direction are formed in the respective axial end portions of the outer peripheral surface. Multiple axial grooves 36 are formed at intervals in the circumferential direction, as shown in FIGs. 2 to 4. The depth of each axial groove 36 is substantially equal to the depth of the recess 35, and sufficiently larger than the seal gap t formed between each seal member 24 and the outer peripheral surface of the inner ring 11.

Radial grooves 38 that extend in the radial direction are formed in an axial end portion (left end portion) of the outer ring 12, which contacts the step portion 32 of the housing 20. Multiple radial grooves 38 are formed at intervals in the circumferential direction, like the axial grooves 36. In the embodiment, the number of the axial grooves 36 is equal to the number of the radial grooves 38. The axial grooves 36 and the radial grooves 38 are formed at the same positions in the circumferential direction.

A circumferential groove (communication groove) 40 is formed at a boundary portion (comer portion) between the outer peripheral surface of the outer ring 12, in which the axial grooves 36 are formed, and the axial end surface of the outer ring 12, in which the radial grooves 38 are formed. The circumferential groove 40 is formed along the whole circumference of the outer ring 12. The circumferential groove 40 provides communication between all the axial grooves 36 and radial grooves 38.

As shown in FIG. 1, the above-described axial grooves 36 and radial grooves 38 form escape passages 41 through which the fluid that flows around the rolling bearing 10 is circulated. When high pressure fluid such as gas or liquid is present around the rolling bearing 10, if the axial grooves 36 and the radial grooves 38 are not formed, the fluid that has entered the housing 20 may enter the annular space within the rolling bearing 10 through the seal gaps t and wash away the grease within the rolling bearing 10. The early exhaustion of the grease may cause increases in the rotational load or reduce the durability.

In contrast, according to the embodiment the axial grooves 36 and the radial grooves 38 are formed in the outer ring 12. Therefore, the fluid that has centered the housing 20 is circulated in the axial direction through the escape passages 41 formed of the axial grooves 36 and the radial grooves 38 as indicated by arrows in FIG. 1, and the fluid is allowed to escape so that the fluid does not enter the inside of the rolling bearing 10 through the seal gaps t. Accordingly, it is possible to appropriately keep grease within the rolling bearing 10, thereby maintaining the lubricating function.

The circumferential groove 40 is formed in the outer ring 12 to provide communication between the multiple radial grooves 38 and the multiple axial grooves 36. Accordingly, it is possible to more easily circulate the fluid.
In addition, the volume of the escape passages 41 is increased by the recess 35 formed in the axial center portion of the outer peripheral surface of the outer ring 12. Accordingly, it is possible to decrease the flow resistance of the fluid that flows through the axial grooves 36.

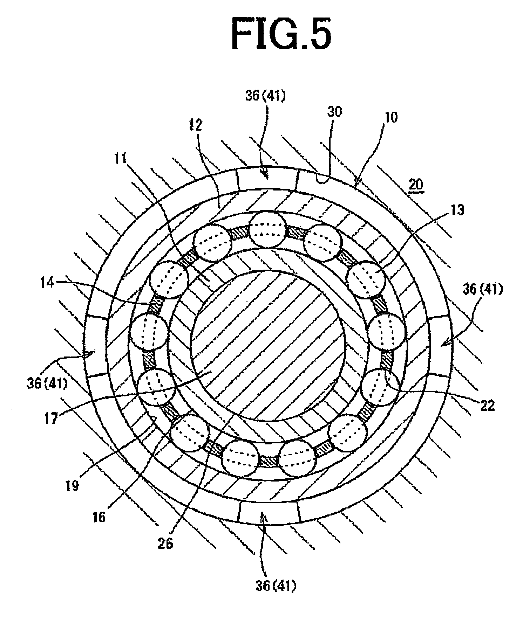

Note that the invention is not limited to the above-described embodiment, and may be modified as needed within the scope of the inventions described in claims.
The number of the axial grooves 36 and radial grooves 38 (the number of escape passages 41) formed in the outer ring 12 is not particularly limited, and may be changed as needed. For example, in a modified example shown in FIG. 5, four axial grooves 36 are formed in the outer peripheral surface of the outer ring 12 at regular intervals (at intervals of 90 degrees). In this configuration as well, it is possible to allow the fluid present around the rolling bearing 10 to escape through the axial grooves 36, and to suppress entrance of the fluid present around the rolling bearing 10 into the annular space between the outer ring 12 and the inner ring 11. Although the radial grooves 38 and the circumferential groove 40 are not shown in FIG 5, these grooves 38 and 40 are formed according to the invention in the outer ring 12 as in the above-described embodiment.

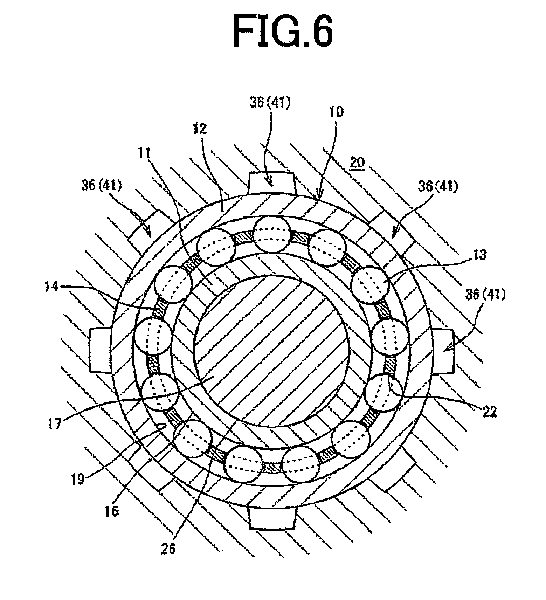

The axial grooves 36 and the radial grooves 38 (escape passages 41) may be formed in the housing 20, not in the outer ring 12. For example, in a modified example shown in FIG. 6, multiple axial grooves 36 (escape passages 41) are formed in the fitted portion 30, which is formed in the housing 20 and to which the outer ring 12 is fitted, at intervals in the circumferential direction. Accordingly, it is possible to allow the fluid present around the rolling bearing 10 to escape through the axial grooves 36, and to suppress entrance of the fluid present around the rolling bearing 10 into the annular space between the outer ring 12 and the inner ring 11. Although the radial grooves 38 and the circumferential groove 40 are not shown in FIG. 6, these grooves 38 and 40 are formed in the housing 20.
The axial grooves 36 and the radial grooves 38 may be formed in both the outer ring 12 and the housing 20.

In the embodiment described above, the recess 35 is formed in the axial center portion of the outer peripheral surface of the outer ring 12. When both axial end surface of the outer ring 12 of the rolling bearing 10 contact the housing 20, the radial grooves 38 may be formed in the both end surfaces. The seal members that seal up the annular space between the outer ring 12 and the inner ring 11 may be contact-type seal members.

In the embodiment described above, the outer ring 12 is used as the fixed bearing ring that is fixed to the housing (fixed member) 20, and the inner ring 11 is used as the rotating bearing ring fixed to the rotating shaft (rotating member) 17. Alternatively, the invention may be applied to a rolling bearing device in which the outer ring 12 is used as a rotating bearing ring fixed to a rotating member and the inner ring 11 is used as a fixed bearing ring fixed to a fixed member.
The invention may be applied to various bearings such as groove ball bearings that are different from the ball bearing in the embodiment described above, cylindrical roller bearings and tapered roller bearings.

With the configurations described above, when the rolling bearing device is used under the environment where the fluid flows around the rolling bearing, it is possible to suppress entrance of the fluid into the annular space between the fixed bearing ring and the rotating bearing ring, which is sealed up with the seal members, by allowing the fluid to escape through the escape passages. Accordingly, even if grease is supplied in the annular space, the grease is hardly washed away by the fluid. As a result, it is possible to suppress a decrease in the lubricating function.

The seal members are preferably non-contact-type seal members which are fixed to the fixed bearing ring and with which seal gaps are formed between the seal members and the rotating bearing ring. In this case, almost no sliding resistance is generated between the seal members and the rotating bearing ring. In addition, the situation hardly occurs where the fluid present around the rolling bearing enters the seal gaps between the seal members and the rotating bearing ring and the grease leaks through the seal gaps. Therefore, it is possible to appropriately maintain the lubricating function. Accordingly, the rolling bearing device according to the invention is appropriately used for a rotating device that rotates at high speed.
A rolling bearing 10 includes an outer ring 12 fixed to a housing 20, an inner ring 11 that is arranged so as to face the outer ring 12 in the radial direction of the rolling bearing and that is fixed to a rotating shaft 17, balls 13 that are rollably arranged at positions between the outer ring 12 and the inner ring 11 in the radial direction, and seal members 24 that seal up an annular space between the outer ring 12 and the inner ring 11. Escape passages 41 through which fluid is circulated in the axial direction of the rolling bearing so as to be allowed to escape are formed in a contact portion of the outer ring 12, which contacts the housing 20.

## Claims

1. A rolling bearing device, comprising:
a fixed member (20);
a fixed bearing ring (12) that is fixed to the fixed member (20);
a rotatable bearing ring (11) that is arranged so as to face the fixed bearing ring (12) in a radial direction of the rolling bearing device (10) and that is fixable to a rotating member (17);
a rolling element (13) that is rollably arranged at a position between the fixed bearing ring (12) and the rotatable bearing ring (11) in the radial direction; and
a seal member (24) that seals up an annular space between the fixed bearing ring (12) and the rotatable bearing ring (11),
wherein an escape passage (41, 35, 36, 38) through which fluid is circulated in an axial direction of the rolling bearing device (10) so as to be allowed to escape is formed in at least one of a contact portion of the fixed member (20) and a contact portion of the fixed bearing ring (12), the fixed member (20) and the fixed bearing ring (12) contacting each other at the contact portions,
**characterized in that**
the escape passage (41, 35, 36, 38) is formed in a peripheral surface and an axial end surface of the fixed bearing ring (12), a communication groove (40) is formed at a boundary portion between the peripheral surface and the axial end surface of the fixed bearing ring (12) along the circumference of the fixed bearing ring (12) in order to provide communication between the escape passage (41, 35, 36, 38) formed in the peripheral surface and in the axial end surface of the fixed bearing ring (12), and a recess (35) is formed in an axial center portion of the peripheral surface of the fixed bearing ring (12) so as to extend along the whole circumference of the fixed bearing ring (12) such that volume of the escape passage (41, 35, 36, 38) is increased, and/or
the escape passage (41, 35, 36, 38) is formed in a peripheral surface and an axial end surface of the fixed member (20), a communication circumferential groove (40) is formed at a boundary portion between the peripheral surface and the axial end surface of the fixed member (20) in order to provide communication between the escape passage (41, 35, 36, 38) formed in the peripheral surface and in the axial end surface of the fixed member (20), and a recess (35) is formed in an axial center portion of the peripheral surface of the fixed member (20) so as to extend along the whole circumference of the fixed member (20) such that volume of the escape passage (41, 35, 36, 38) is increased.

2. A rolling bearing device (10), comprising:
a fixed bearing ring (12) that is fixable to a fixed member (20);
a rotatable bearing ring (11) that is arranged so as to face the fixed bearing ring (12) in a radial direction of the rolling bearing device (10) and that is fixable to a rotating member (17);
a rolling element (13) that is rollably arranged at a position between the fixed bearing ring (12) and the rotatable bearing ring (11) in the radial direction; and
a seal member (24) that seals up an annular space between the fixed bearing ring (12) and the rotatable bearing ring (11),
wherein an escape passage (41, 35, 36 ,38) through which fluid is circulated in an axial direction of the rolling bearing device (10) so as to be allowed to escape is formed in a contact portion of the fixed bearing ring (12), which contacts the fixed member (20),
**characterized in that**
the escape passage (41, 35, 36, 38) is formed in a peripheral surface and an axial end surface of the fixed bearing ring (12), a communication groove (40) is formed at a boundary portion between the peripheral surface and the axial end surface of the fixed bearing ring (12) along the circumference of the fixed bearing ring (12) in order to provide communication between the escape passage (41, 35, 36, 38) formed in the peripheral surface and in the axial end surface of the fixed bearing ring (12), and a recess (35) is formed in an axial center portion of the peripheral surface so as to extend along the whole circumference of the fixed bearing ring (12) such that volume of the escape passage (41, 35, 36, 38) is increased.

3. The rolling bearing device according to claim 1 or 2, wherein the seal member (24) is a non-contact-type seal member which is fixed to the fixed bearing ring (12) and with which a seal gap (t) is formed between the seal member (12) and the rotatable bearing ring (11).

4. The rolling bearing device according to any one of claims 1 to 3, wherein a plurality of the escape passages (41, 35, 36, 38) is formed at intervals in a circumferential direction of the rolling bearing device.

5. The rolling bearing device according to any one of claims 1 to 3, wherein:
a plurality of the escape passages (41, 35, 36, 38) is formed at intervals in a circumferential direction of the rolling bearing device; and
the communication groove (40) that provides communication between the plurality of the escape passages (41, 35, 36, 38) formed in the peripheral surface of the fixed bearing ring (12) and the plurality of the escape passages (41, 35, 36, 38) formed in the axial end surface of the fixed bearing ring (12) is formed at the boundary portion between the peripheral surface and the axial end surface of the fixed bearing ring (12).

## Patentansprüche

1. Wälzlagervorrichtung mit:
einem fixierten Bauteil (20);
einem fixierten Lagerring (12), der an dem fixierten Bauteil (20) fixiert ist;
einem drehbaren Lagerring (11), der angeordnet ist, um dem fixierten Lagerring (12) in einer radialen Richtung der Wälzlagervorrichtung (10) zugewandt zu sein, und der an einem Drehbauteil (17) fixierbar ist;
einem Wälzelement (13), das an einer Position zwischen dem fixierten Lagerring (12) und dem drehbaren Lagerring (11) in der radialen Richtung abwälzbar angeordnet ist; und
einem Dichtungsbauteil (24), das einen ringförmigen Raum zwischen dem fixierten Lagerring (12) und dem drehbaren Lagerring (11) abdichtet,
wobei ein Entweichdurchgang (41, 35, 36, 38), durch den Fluid in einer axialen Richtung der Wälzlagervorrichtung (10) zirkuliert, so dass es entweichen kann, in zumindest einem von einem Kontaktabschnitt des fixierten Bauteils (20) und einem Kontaktabschnitt des fixierten Lagerrings (12) ausgebildet ist, wobei das fixierte Bauteil (20) und der fixierte Lagerring (12) einander an den Kontaktabschnitten berühren,
**dadurch gekennzeichnet, dass**
der Entweichdurchgang (41, 35, 36, 38) in einer Umfangsfläche und einer axialen Endfläche des fixierten Lagerrings (12) ausgebildet ist, eine Verbindungsnut (40) an einem Grenzabschnitt zwischen der Umfangsfläche und der axialen Endfläche des fixierten Lagerrings (12) entlang des Umfangs des fixierten Lagerrings (12) ausgebildet ist, um eine Verbindung zwischen dem Entweichdurchgang (41, 35, 36, 38) vorzusehen, der in der Umfangsfläche und in der axialen Endfläche des fixierten Lagerrings (12) ausgebildet ist, und eine Aussparung (35) in einem axialen mittleren Abschnitt der Umfangsfläche des fixierten Lagerrings (12) ausgebildet ist, um sich entlang des gesamten Umfangs des fixierten Lagerrings (12) derart zu erstrecken, dass ein Volumen des Entweichdurchgangs (41, 35, 36, 38) vergrößert ist, und/oder
der Entweichdurchgang (41, 35, 36, 38) in einer Umfangsfläche und einer axialen Endfläche des fixierten Bauteils (20) ausgebildet ist, eine Verbindungsumfangsnut (40) an einem Grenzabschnitt zwischen der Umfangsfläche und der axialen Endfläche des fixierten Bauteils (20) ausgebildet ist, um eine Verbindung zwischen dem Entweichdurchgang (41, 35, 36, 38) vorzusehen, der in der Umfangsfläche und in der axialen Endfläche des fixierten Bauteils (20) ausgebildet ist, und eine Aussparung (35) in einem axialen mittleren Abschnitt der Umfangsfläche des fixierten Bauteils (20) ausgebildet ist, um sich entlang des gesamten Umfangs des fixierten Bauteils (20) derart zu erstrecken, dass ein Volumen des Entweichdurchgangs (41, 35, 36, 38) vergrößert ist.

2. Wälzlagervorrichtung (10) mit:
einem fixierten Lagerring (12), der an einem fixierten Bauteil (20) fixierbar ist;
einem drehbaren Lagerring (11), der angeordnet ist, um zu dem fixierten Lagerring (12) in einer radialen Richtung der Wälzlagervorrichtung (10) zugewandt zu sein, und der an einem Drehbauteil (17) fixierbar ist;
einem Wälzelement (13), das an einer Position zwischen dem fixierten Lagerring (12) und dem drehbaren Lagerring (11) in der radialen Richtung abwälzbar angeordnet ist; und
einem Dichtungsbauteil (24), das einen ringförmigen Raum zwischen dem fixierten Lagerring (12) und dem drehbaren Lagerring (11) abdichtet,
wobei ein Entweichdurchgang (41, 35, 36, 38), durch den Fluid in einer axialen Richtung der Wälzlagervorrichtung (10) zirkuliert, so dass es entweichen kann, in einem Kontaktabschnitt des fixierten Lagerrings (12) ausgebildet ist, der das fixierte Bauteil (20) berührt,
**dadurch gekennzeichnet, dass**
der Entweichdurchgang (41, 35, 36, 38) in einer Umfangsfläche und einer axialen Endfläche des fixierten Lagerrings (12) ausgebildet ist, eine Verbindungsnut (40) an einem Grenzabschnitt zwischen der Umfangsfläche und der axialen Endfläche des fixierten Lagerrings (12) entlang dem Umfang des fixierten Lagerrings (12) ausgebildet ist, um eine Verbindung zwischen dem Entweichdurchgang (41, 35, 36, 38) vorzusehen, der in der Umfangsfläche und in der axialen Endfläche des fixierten Lagerrings (12) ausgebildet ist, und eine Aussparung (35) in einem axialen mittleren Abschnitt der Umfangsfläche ausgebildet ist, um sich entlang des gesamten Umfangs des fixierten Lagerrings (12) derart zu erstrecken, dass ein Volumen des Entweichdurchgangs (41, 35, 36, 38) vergrößert ist.

3. Wälzlagervorrichtung nach Anspruch 1 oder 2, wobei das Dichtungsbauteil (24) ein Dichtungsbauteil der Nichtkontaktbauart ist, das an dem fixierten Lagerring (12) fixiert ist und mit dem ein Dichtungsspalt (t) zwischen dem Dichtungsbauteil (12) und dem drehbaren Lagerring (11) ausgebildet ist.

4. Wälzlagervorrichtung nach einem der Ansprüche 1 bis 3, wobei eine Vielzahl der Entweichdurchgänge (41, 35, 36, 38) mit Abständen in einer Umfangsrichtung der Wälzlagervorrichtung ausgebildet ist.

5. Wälzlagervorrichtung nach einem der Ansprüche 1 bis 3, wobei:
eine Vielzahl der Entweichdurchgänge (41, 35, 36, 38) mit Abständen in einer Umfangsrichtung der Wälzlagervorrichtung ausgebildet ist; und
die Verbindungsnut (40), die eine Verbindung zwischen der Vielzahl der Entweichdurchgänge (41, 35, 36, 38), die in der Umfangsfläche des fixierten Lagerrings (12) ausgebildet sind, und der Vielzahl der Entweichdurchgänge (41, 35, 36, 38) vorsieht, die in der axialen Endfläche des fixierten Lagerrings (12) ausgebildet sind, an dem Grenzabschnitt zwischen der Umfangsfläche und der axialen Endfläche des fixierten Lagerrings (12) ausgebildet ist.

## Revendications

1. Dispositif de palier à roulement, comprenant :
un élément fixe (20) ;
une bague de roulement fixe (12) qui est attachée à l'élément fixe (20) ;
une bague de roulement rotative (11) qui est agencée de manière à faire face à la bague de roulement fixe (12) dans une direction radiale du dispositif de palier à roulement (10) et qui peut être attachée à un élément rotatif (17) ;
un élément de roulement (13) qui est agencé de manière à rouler à une position entre la bague de roulement fixe (12) et la bague de roulement rotative (11) dans la direction radiale ; et
un élément d'étanchéité (24) qui rend étanche un espace annulaire entre la bague de roulement fixe (12) et la bague de roulement rotative (11),
dans lequel un passage d'échappement (41, 35, 36, 38), à travers lequel on fait circuler un fluide dans une direction axiale du dispositif de palier à roulement (10) de manière à ce qu'il puisse s'échapper, est formé dans au moins l'une d'une partie de contact de l'élément fixe (20) et d'une partie de contact de la bague de roulement fixe (12), l'élément fixe (20) et la bague de roulement fixe (12) étant en contact l'un avec l'autre au niveau des parties de contact,
**caractérisé en ce que**
le passage d'échappement (41, 35, 36, 38) est formé dans une surface périphérique et une surface d'extrémité axiale de la bague de roulement fixe (12), une rainure de communication (40) est formée au niveau d'une partie limite entre la surface périphérique et la surface d'extrémité axiale de la bague de roulement fixe (12) le long de la circonférence de la bague de roulement fixe (12) afin de fournir une communication entre le passage d'échappement (41, 35, 36, 38) formé dans la surface périphérique et dans la surface d'extrémité axiale de la bague de roulement fixe (12), et un évidement (35) est formé dans une partie centrale axiale de la surface périphérique de la bague de roulement fixe (12) de manière à s'étendre le long de toute la circonférence de la bague de roulement fixe (12) de sorte que le volume du passage d'échappement (41, 35, 36, 38) soit augmenté, et/ou
le passage d'échappement (41, 35, 36, 38) est formé dans une surface périphérique et une surface d'extrémité axiale de l'élément fixe (20), une rainure circonférentielle de communication (40) est formée au niveau d'une partie limite entre la surface périphérique et la surface d'extrémité axiale de l'élément fixe (20) afin de fournir une communication entre le passage d'échappement (41, 35, 36, 38) formé dans la surface périphérique et dans la surface d'extrémité axiale de l'élément fixe (20), et un évidement (35) est formé dans une partie centrale axiale de la surface périphérique de l'élément fixe (20) de manière à s'étendre le long de toute la circonférence de l'élément fixe (20) de sorte que le volume du passage d'échappement (41, 35, 36, 38) soit augmenté.

2. Dispositif de palier à roulement (10), comprenait
une bague de roulement fixe (12) qui peut être attachée à un élément fixe (20) ;
une bague de roulement rotative (11) qui est agencée de manière à faire face à la bague de roulement fixe (12) dans une direction radiale du dispositif de palier à roulement (10) et qui peut être attachée à un élément rotatif (17) ; ;
un élément de roulement (13) qui est agencé de manière à rouler à une position entre la bague de roulement fixe (12) et la bague de roulement rotative (11) dans la direction radiale ; et
un élément d'étanchéité (24) qui rend étanche un espace annulaire entre la bague de roulement fixe (12) et la bague de roulement rotative (11),
dans lequel un passage d'échappement (41, 35, 36, 38), à travers lequel on fait circuler un fluide dans une direction axiale du dispositif de palier à roulement (10) de manière à ce qu'il puisse s'échapper, est formé dans une partie de contact de la bague de roulement fixe (12), qui entre en contact avec l'élément fixe (20),
**caractérisé en ce que**
le passage d'échappement (41, 35, 36, 38) est formé dans une surface périphérique et une surface d'extrémité axiale de la bague de roulement fixe (12), une rainure de communication (40) est formée au niveau d'une partie limite entre la surface périphérique et la surface d'extrémité axiale de la bague de roulement fixe (12) le long de la circonférence de la bague de roulement fixe (12) afin de fournir une communication entre le passage d'échappement (41, 35, 36, 38) formé dans la surface périphérique et dans la surface d'extrémité axiale de la bague de roulement fixe (12), et un évidement (35) est formé dans une partie centrale axiale de la surface périphérique de manière à s'étendre le long de toute la circonférence de la bague de roulement fixe (12) de sorte que le volume du passage d'échappement (41, 35, 36, 38) soit augmenté.

3. Dispositif de palier à roulement selon la revendication 1 ou 2, dans lequel l'élément d'étanchéité (24) est un élément d'étanchéité du type sans contact qui est attaché à la bague de roulement fixe (12) et avec lequel un espace d'étanchéité (t) est formé entre l'élément d'étanchéité (12) et la bague de roulement rotative (11).

4. Dispositif de palier à roulement selon l'une quelconque des revendications 1 à 3, dans lequel une pluralité de passages d'échappement (41, 35, 36, 38) est formée à des intervalles dans une direction circonférentielle du dispositif de palier à roulement.

5. Dispositif de palier à roulement selon l'une quelconque des revendications 1 à 3, dans lequel :
une pluralité de passages d'échappement (41, 35, 36, 38) est formée à des intervalles dans une direction circonférentielle du dispositif de palier à roulement ; et
la rainure de communication (40) qui fournit une communication entre la pluralité de passages d'échappement (41, 35, 36, 38) formée dans la surface périphérique de la bague de roulement fixe (12) et la pluralité de passages d'échappement (41, 35 , 36, 38) formée dans la surface d'extrémité axiale de la bague de roulement fixe (12) est formée au niveau de la partie limite entre la surface périphérique et la surface d'extrémité axiale de la bague de roulement fixe (12).
